# EUROPEAN PATENT APPLICATION

(11) **EP 4 643 639 A1**
(43) Date of publication of application: **05.11.2025**
(21) Application number: 24212805.6
(22) Date of filing: 13.11.2024
(51) Int. Cl.: A01K 15/02, A63H 9/00

(54) **WEIGHTED TOY**

(30) Priority: 30.04.2024 US 202418650782
(71) Applicant: Rolf C. Hagen, Inc., Baie d'Urfé, QC H9X 0A2 (CA)
(72) Inventor: DE BOECK, Lucas, 2580 Putte (BE)
(74) Representative: HGF

(57) **Abstract**

In some embodiments, a toy is disclosed. In some embodiments, the toy includes an expanded thermoplastic polyurethane (ETPU) outer shell portion and a core portion formed of a material with a higher density than the ETPU forming the outer shell portion. In some embodiments, a mold for forming a toy with an ETPU outer shell portion and with a core portion formed of a different material is disclosed. In some embodiments, a method of forming a toy with an ETPU outer shell portion and core portion formed of a different material is disclosed.

## Description

### FIELD

The field is related to weighted toys, as well as molds for forming weighted toys and methods of forming weighted toys.

### BACKGROUND

Pet owners often use throwing toys (e.g. balls, discs, rings, batons, etc.) to play with their pets (e.g. playing fetch) in order to give their pet exercise and stimulation, as well as to bond with their pet. Because pets often chew on such toys, the toys are generally constructed from resilient and pet-safe materials.

### SUMMARY

In some embodiments, a toy is disclosed, the toy comprising a core portion formed of a first material, and an outer shell portion formed of expanded thermoplastic polyurethane (ETPU) and disposed around the core portion. The first material has a higher density than the ETPU forming the outer shell.

In some embodiments, a mold for forming a toy is disclosed, the mold comprising a first mold portion comprising a first cavity, a second mold portion comprising a second cavity, the first cavity and second cavity configured to align to form a combined cavity when the mold is in a closed configuration, and a projection extending from a surface of one of the first cavity or the second cavity towards a center of the combined cavity.

In some embodiments, a method of forming a toy is disclosed, the method comprising: placing a core portion of the toy on a projection extending from a surface of a first cavity of a first mold portion of a mold, aligning a second cavity of a second mold portion of the mold with the first cavity of the first mold portion, such that a combined cavity is formed, introducing an amount of at least partially unexpanded polyurethane beads into at least one of the first cavity, the second cavity, and/or the combined cavity, and injecting steam into the mold to cause the polyurethane beads to expand.

It should be appreciated that the foregoing concepts, and additional concepts discussed below, may be arranged in any suitable combination, as the present disclosure is not limited in this respect. Further, other advantages and novel features of the present disclosure will become apparent from the following detailed description of various non-limiting embodiments when considered in conjunction with the accompanying figures.

### BRIEF DESCRIPTION OF DRAWINGS

The accompanying drawings are not intended to be drawn to scale. In the drawings, each identical or nearly identical component that is illustrated in various figures may be represented by a like numeral. For purposes of clarity, not every component may be labeled in every drawing. In the drawings:
FIG. 1 shows a cross-sectional view of a toy according to an embodiment;
FIG. 2A shows a cross-sectional view of a mold for forming the toy of FIG. 1 in an open configuration;
FIG. 2B shows a cross-sectional view of a mold for forming the toy of FIG. 1 in a closed configuration;
FIG. 3A shows a cross-sectional view of a mold at an initial stage of forming a toy according to an embodiment;
FIG. 3B shows a cross-sectional view of a mold at a further stage of forming a toy than FIG. 3A;
FIG. 3C shows a cross-sectional view of a mold at a further stage of forming a toy than FIG. 3B;
FIG. 3D shows a cross-sectional view of a mold at a further stage of forming a toy than FIG. 3C; AND
Fig. 4 shows cross-sectional views of alternatively shaped toys according to embodiments.

### DETAILED DESCRIPTION

Pet owners often use throwing toys to play with their pets. Many pet toy makers have relatively recently begun making such throwing toys from expanded thermoplastic polyurethane (ETPU) for its high durability, its elasticity, its pet-safe qualities, and its lightweight properties (e.g. to allow the ball to float). However, the inventors have recognized that ETPU toys suitably sized for playing fetch are too lightweight, leading to undesirable flight characteristics when thrown. For instance, such toys have a limited throwing range due to air resistance.

The inventors have therefore recognized an advantage to a throwing toy with an ETPU outer shell portion, and a core portion formed of a material having a higher density than the ETPU outer shell portion. Such a configuration may allow for the retention of the desirable properties of ETPU (e.g. high durability, pet safe qualities, high elasticity, etc.), while also increasing the weight of the ETPU throwing toy, leading to more desirable throwing properties. The inventors have also recognized an advantage to forming the core portion from a material with high elasticity, in order to allow the throwing toy to bounce better. Therefore, in some embodiments, the core portion is formed of rubber.

The inventors have also recognized an advantage to forming such a weighted ETPU throwing toy via steam chest molding. Therefore, in some embodiments, a mold is used to form the toy. The mold may include first and second mold portions, each mold portion including a cavity corresponding to a shape of a section of the outer surface of the outer shell portion, such that when the mold is moved to a closed configuration and the cavities are aligned, a combined cavity corresponding to the shape of the outer surface of the outer shell portion of the throwing toy is formed. For instance, if the throwing toy is a ball, each mold portion may include a hemispherical cavity corresponding to the shape of half of the outer shell portion, such that when the hemispherical cavities are aligned, a spherical cavity matching the shape of the outer shell portion of the ball is formed. In use, the mold may be at least partially filled with unexpanded or partially expanded TPU beads. In some embodiments, the TPU beads are added prior to the mold being closed. In some embodiments, the beads are added into the mold via at least one hole in the mold after the cavities are aligned. Steam may then be introduced into the mold via at least one hole in the mold to expand the TPU beads and fuse them together, forming the ETPU outer shell portion. In some embodiments, steam is introduced via a plurality of holes. In some embodiments, both the TPU beads and the steam is introduced into the mold through the same hole(s). In some embodiments, the TPU beads and steam are introduced into the mold via separate holes. In some embodiments, only steam is introduced into the mold via at least one hole. At least one of the first and second mold portions may include at least one projection extending from a surface of the cavity towards a center of the cavity. The projection(s) may be configured to receive the core portion of the toy prior to the cavities of the mold portions being aligned. Such a configuration may allow for the core portion to be suspended within the outer shell portion during formation of the toy.

Turning to the figures, specific non-limiting embodiments are described in further detail. It should be understood that the various systems, components, features, and methods described relative to these embodiments may be used either individually and/or in any desired combination as the disclosure is not limited to only the specific embodiments described herein.

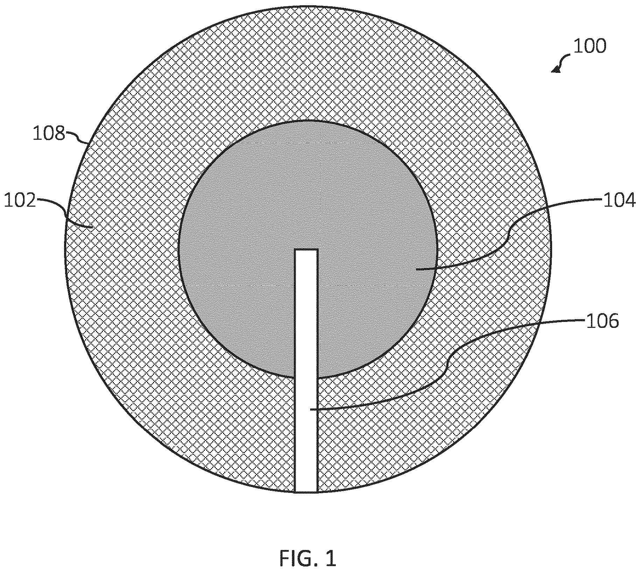

FIG. 1 shows a cross sectional view of a weighted throwing toy 100 according to an embodiment. As discussed above, the toy 100 may include an outer shell portion 102 formed of ETPU, and a core portion 104 formed of a material having a higher density than the ETPU forming outer shell portion 102. Such a configuration may allow for the toy 100 to retain the beneficial properties of ETPU (e.g. high durability, high elasticity, resistance to chewing, pet-safe qualities, etc.), while also allowing the toy 100 to be heavy enough for optimal throwing characteristics. In some embodiments, the core portion 104 may be a different color from the outer shell portion 102. Such a configuration may allow the core portion 104 to serve as a visual indicator to pet owners that their pet has chewed through the entire outer shell portion 102, and that the toy should be replaced. In some embodiments, the core portion 104 may be fully enclosed within the outer shell portion 102.

The core portion 104 may be formed of any suitable material which allows for the toy to reach the desired weight. In some embodiments, the core portion 104 may be formed of thermoplastic rubber (TPR), natural vulcanized rubber, or any other suitable rubber material. Such a configuration may allow the toy to reach the desired weight, and may also allow the toy to retain a high elasticity, leading to better bounce characteristics.

In some embodiments, the core portion 104 may be centered within toy 100, such that outer shell portion 102 has a generally uniform thickness. Such a configuration may allow for more predictable throwing and bouncing characteristics. In some embodiments, the core portion 104 may be disposed off-center within outer shell portion 102, such that at least some sections of outer shell portion 102 have non-uniform thicknesses. Such a configuration may lead to more erratic and unpredictable throwing and/or bouncing characteristics. In some embodiments, the core portion 104 may be multiple separated core portions disposed inside the outer shell portion 102, rather than a single core portion.

In some embodiments, the toy may include at least one cavity 106 extending through the outer shell portion 102 and into the core portion 104. Such a configuration may allow for the suspension of the core portion 104 in the outer shell portion of the toy 100 during formation of toy 100, as discussed further below. In some embodiments, the cavity 106 is filled after forming the toy 100.

It should be understood that toy 100 may be any suitable toy for throwing. While the toy 100 shown in FIG. 1 is a ball, any other suitable shape is contemplated, such as a disc, a baton, a ring, an irregularly shaped toy, etc., as the disclosure is not so limited.

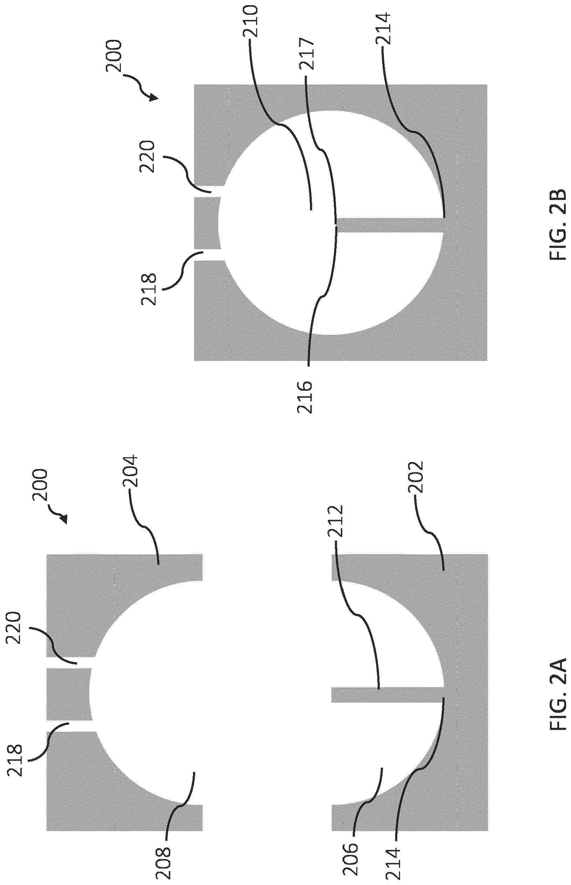

FIGs. 2A and 2B show cross sectional views of a mold 200 for forming toy 100 in open and closed configurations, respectively, according to an embodiment. As discussed above, in some embodiments, it may be desirable to form the toy 100 via mold 200. In some embodiments, the mold 200 includes a first mold portion 202 and a second mold portion 204. The first mold portion 202 may include a first cavity 206, and the second mold portion may include a second cavity 208. Each of the first mold portions 202 and second mold portions 204 are configured to correspond to a shape of a section of outer surface 108 of toy 100, such that when the first and second mold portions 202 and 204 are moved to the closed configuration and first cavity 206 and second cavity 208 are aligned, a combined cavity 210 is formed which corresponds to the shape of the outer surface 108 of the toy 100.

In some embodiments, at least one of the mold portions includes at least one projection extending from a side of one of the cavities towards a center of the mold and configured to hold the core portion 104 suspended within cavity 210 while the toy is formed. For instance, as seen in FIGs. 2A and 2B, first mold portion 202 includes a projection 212 extending from a surface 214 of first cavity 206 towards a center 216 of the combined cavity 210. In some embodiments, as seen in FIG. 2B, the projection 212 extends to the center of combined cavity 210, such that end 217 of the projection 212 is aligned with the center 216 of combined cavity 210. The projection 212 may be configured to receive the core portion 104 of toy 100, such that the core portion 104 is suspended within outer shell portion 102. In some embodiments, the core portion 104 may be aligned off-center inside the combined cavity 210. In some embodiments, multiple projections extend from at least one surface of at least one cavity of the mold in order to better support and/or align the core portion in the mold.

While the above embodiments describe a mold with two mold portions, each mold portion with a cavity, any number of mold portions and cavities which combine to form the shape of outer surface 108 of toy 100 is contemplated. In some embodiments, as seen in FIGs. 2A and 2B, each cavity corresponds to equally sized sections of outer surface 108. In some embodiments, at least some cavities correspond to different sized sections of outer surface 108.

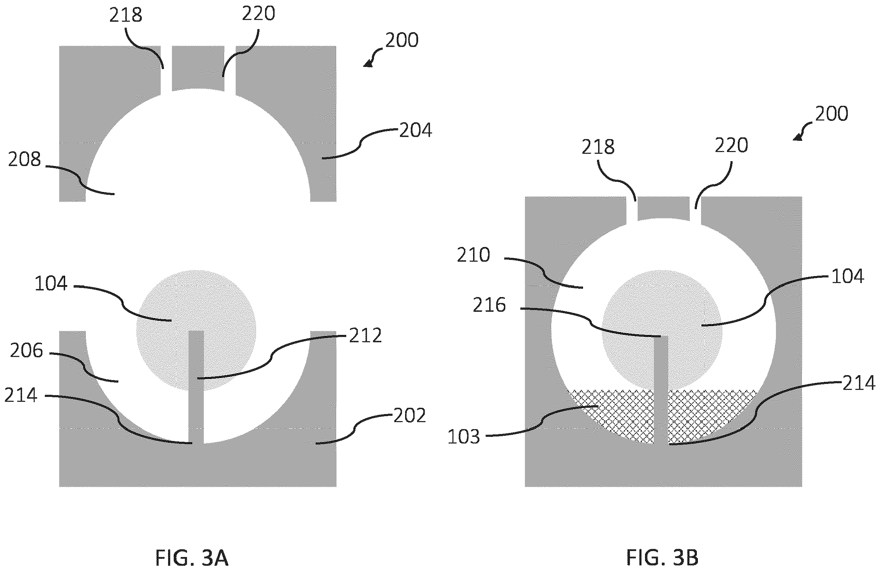

FIGs. 3A-3D show mold 200 in various stages of forming toy 100. To form toy 100, core portion 104 is first disposed onto projection 212 while the mold is in the open configuration, as seen in FIG. 3A. In some embodiments, unexpanded or partially expanded TPU beads are placed into the mold 200 while the mold in the open configuration shown in FIG. 3A. The mold 200 may then closed, as seen in FIG. 3B, such that core portion 104 is disposed at a desired location within the combined cavity 210 (e.g. centered within cavity 210, offset from the center of cavity 210, etc.). If the TPU beads 103 were not previously added while the mold was in the open configuration, the TPU beads may be introduced into the combined cavity 210 via at least one hole 218. In some embodiments, the at least one hole 218 may be closed after the TPU beads are introduced into the combined cavity 210.

Once the mold 200 is closed and TPU beads 103 are introduced into the cavity 210, steam may be introduced into the mold via at least one hole. In some embodiments, steam is introduced through hole 218, the same hole as the TPU beads 103 are introduced through. In some embodiments, steam is introduced via at least one separate hole 220. In some embodiments, hole(s) 220 may have a different cross-sectional area as compared to hole(s) 218. In embodiments where the TPU beads 103 are introduced into the mold 200 while the mold is in the open configuration, the mold 200 may only include holes 220, not holes 218.

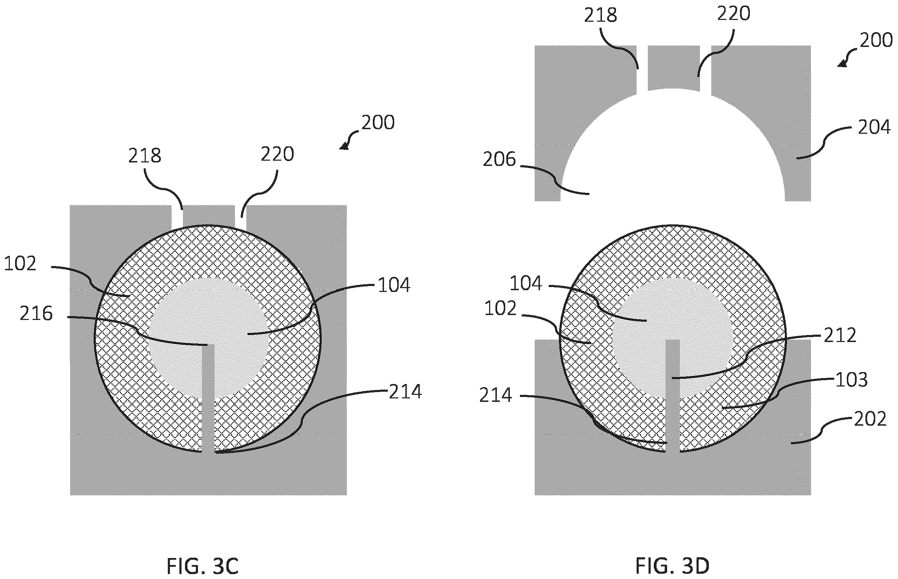

As steam is introduced, the TPU beads 103 expand to match the shape of combined cavity 210 and fuse together to form the outer shell portion 102 of toy 100, as seen in FIG 3C. The mold may then be moved to the open configuration to allow the completed toy 100to be removed, as seen in FIG. 3D. In some embodiments, the cavity 106 in toy 100 left by projection 212 may be filled.

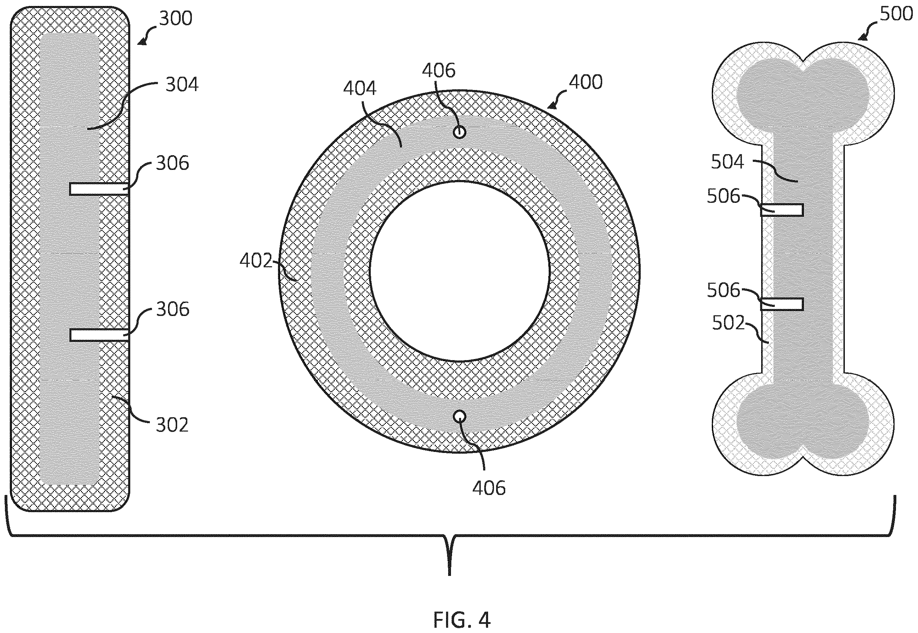

As mentioned above, while toy 100 is shown as a spherical ball, and while mold 200 is a mold for forming such a spherical ball, it is contemplated that the mold may be any suitable shape for forming any suitable ETPU toy with a denser core portion, such as batons, rings, discs, irregularly shaped toys, or any other suitably shaped toy, as the disclosure is not so limited. For instance, as seen in FIG. 4, in some embodiments, the toy may be a baton 300, with an ETPU outer shell portion 302, a core portion 304, and at least one cavity 306 for suspending the core portion 304 in a mold. In some embodiments, the toy may be a ring 400, with an ETPU outer shell portion 402, a core portion 404, and at least one cavity 406 for suspending the core portion 404 in a mold. In some embodiments, the toy may be a bone-shaped toy 500, with an ETPU outer shell portion 502, a core portion 504, and at least one cavity 406 for suspending the core portion 504 in a mold.

While the above embodiments disclose forming toy 100 via steam chest molding, any other suitable molding process for forming toy 100 is contemplated, such as injection molding with a chemical blowing agent, direct gassing, compression molding with foaming, or any other suitable molding process.

While the present teachings have been described in conjunction with various embodiments and examples, it is not intended that the present teachings be limited to such embodiments or examples. On the contrary, the present teachings encompass various alternatives, modifications, and equivalents, as will be appreciated by those of skill in the art. Accordingly, the foregoing description and drawings are by way of example only.

## Claims

1. A toy comprising:
a core portion formed of a first material; and
an outer shell portion formed of expanded thermoplastic polyurethane (ETPU) and disposed around the core portion;
wherein the first material has a higher density than the ETPU forming the outer shell.

2. The toy of claim 1, wherein the outer shell fully encloses the core portion.

3. The toy of claim 1 or claim 2, wherein the core portion is a different color from the outer shell portion.

4. The toy of any one of claims 1-3, wherein the first material is rubber.

5. The toy of any one of claims 1-4, wherein the core portion is centered within the outer shell portion, such that the outer shell portion has a generally uniform thickness.

6. The toy of any one of claims 1-4, wherein the core portion is disposed off-center within the outer shell portion, such that at least some sections of the outer shell portion have non-uniform thicknesses.

7. The toy of any one of claims 1-6, further comprising a cavity extending through the outer shell portion and into the core portion.

8. A mold for forming a toy, the mold comprising:
a first mold portion comprising a first cavity;
a second mold portion comprising a second cavity, the first cavity and second cavity configured to align to form a combined cavity when the mold is in a closed configuration; and
a projection extending from a surface of one of the first cavity or the second cavity towards a center of the combined cavity.

9. The mold of claim 8, further comprising at least one hole extending through at least one of the first mold portion and/or second mold portion.

10. The mold of claim 8 or claim 9, wherein an end of the projection is approximately aligned with a center of the combined cavity.

11. A method of forming a toy, the method comprising:
placing a core portion of the toy on a projection extending from a surface of a first cavity of a first mold portion of a mold;
aligning a second cavity of a second mold portion of the mold with the first cavity of the first mold portion, such that a combined cavity is formed;
introducing an amount of at least partially unexpanded polyurethane beads into at least one of the first cavity, the second cavity, and/or the combined cavity; and
injecting steam into the mold to cause the polyurethane beads to expand.
